# EUROPEAN PATENT APPLICATION

(11) **EP 2 763 431 A1**
(43) Date of publication of application: **06.08.2014**
(21) Application number: 13160704.6
(22) Date of filing: 22.03.2013
(51) Int. Cl.: H04N 21/81, H04N 21/43, H04N 21/44, H04N 21/4722

(54) **Method and system of accessing data about products related to a multimedia object**

(30) Priority: 01.02.2013 US 201361759652 P
(71) Applicant: Movym S.r.l., 20124 Milano (IT)
(72) Inventor: Bertani, Sebastiano, 20124 Milano (IT); Arconte, Davide, 20124 Milano (IT); Cicerone, Raffaele, 20124 Milano (IT); Di Fiore, Elio, 20124 Milano (IT)
(74) Representative: Giannesi, Simona

(57) **Abstract**

Method and system of accessing data about products related to a multimedia object, wherein, at a user command, synchronizing data with the multimedia object are obtained. Based on the synchronizing data, a main item of a plurality of main items stored in a database and a set of M second items, associated with the main item within the database, are displayed to the user. Each main item comprises data about an instance of a product classification key and each second item comprises data about a product related to the multimedia object, the set of M second items being associated with the main item within the database according to said product classification key. At a further user command, a new main item of the plurality of main items stored in the database and a new set of M second items, associated with the new main item within the database, are displayed to the user.

## Description

The present invention relates to a method and system of accessing data about products related to a multimedia object.

US 6 505 160 discloses a method of linking an audio signal to metadata or actions wherein audio signals (e.g., music, sound tracks, voice recording, etc.) are transformed into active connected objects via identifiers embedded into them. In a user's player device, a decoding process extracts the identifier from an audio signal and forwards it to a server. The server, in turn, maps the identifier to an action and executes the action, including returning data to the player device and presenting at least a portion of the data to a user during or before playback of the audio signal.

The technical problem of the invention is that of providing a user with a tool for fast, efficient, flexible and user friendly identification, search, retrieval and use of data about products related to a multimedia object.

The Applicant found that this technical problem is solved by a method according to claim 1.

In the present disclosure, the expression "multimedia object" is used to indicate a context comprising different forms of contents. For example, the different forms of contents comprise text, audio, still images and/or motion images (e.g. video). The different contents can be recorded, played, displayed by means of at least one processing electronic device (e.g., TV station, stereo set, PC and similar devices) and accessed by a user device (e.g. tablet, smart-phone and similar devices). For example, multimedia objects can comprise movies, TV news, TV advertisements, TV shows, video clips, (live) sport events, (live) fashion shows, shopping centres (e.g. equipped with a stereo set),(live) concerts and similar.

In the present disclosure, the expression "product related to a multimedia object" is used to indicate any entity appearing, mentioned, audible or having another relationship with a multimedia object. Examples of products related to a multimedia object are goods, locations, music, songs, books, news, actors, singers, scenes of the multimedia object, actors playing in the multimedia object, typologies of products, (available) sizes or models, brands, colours, materials, wish-lists, TV broadcasters, TV scheduling, TV programs, and similar. The product can also be the multimedia object itself or another multimedia object. Examples of goods are commercial goods manufactured or produced for sale such as articles of clothing or furnishing. Examples of locations are commercial sites such as restaurants, bars, pubs, hotels, resorts, tourist sites such as cities, towns, museums, and similar.

In the present disclosure, the expression "product classification key" is used to indicate a key used in a database to classify products related to a multimedia object. The key may be one of the above products or a different key.

In the present disclosure, the expression "item synchronized with a multimedia object" is used to indicate an item having a relationship with the multimedia object at the time of the user command for synchronizing with the multimedia object.

In the present disclosure, the expression "item neighbour to another item in an indexing of the database" indicates an item preceding or following the other item according to predefined indexes used in the database to relate the items to each other.

In the present disclosure, depending on the context, the expression "screen" is used to indicate a surface on which contents are displayed in a user device or the contents displayed on said surface at one time.

In a first aspect, the present invention relates to a method of accessing data about products related to a multimedia object, comprising:
at a user command:
   - obtaining synchronizing data with the multimedia object,
   - based on the synchronizing data, displaying to the user a main item of a plurality of main items stored in a database, and a set of M second items associated with the main item within the database, M being an integer ≥ 1,
wherein:
   * each main item comprises data about an instance of a product classification key and each second item comprises data about a product related to the multimedia object, the set of M second items being associated with the main item within the database according to said product classification key,
   * at least one between the main item and at least one of the M second items is synchronized with the multimedia object;
   at a further user command, the method comprising:
   - displaying to the user a new main item of the plurality of main items stored in the database, and a new set of M second items associated with the new main item within the database, wherein at least one between the new main item and the new set of M second items is different from said main item and said set of M second items.

Advantageously, a user device synchronized with the multimedia object is provided.

Advantageously, the user is given the possibility of navigating both synchronously and asynchronously through the products related to the multimedia object, according to relationships among the items predefined within the database.

Advantageously, data about products related to the multimedia object are displayed to the user grouped according to a product classification key.

Advantageously, the user is given the possibility of navigating through the products related to the multimedia object by displaying them according to different grouping and/or displaying modalities.

Accordingly, an efficient, flexible and user friendly tool for identification, search, retrieval and use of data about products related to a multimedia object is provided.

In another aspect the present disclosure relates to a user device configured to execute the method of the present disclosure.

Preferably, the user device comprises a processor, a memory and a screen configured to enable, at a user command, to:
- obtain synchronizing data with a multimedia object,
- based on the synchronizing data, display into the screen a main item of a plurality of main items stored in a database, and a set of M second items associated with the main item within the database, M being an integer ≥ 1,
wherein:
* each of the main items comprises data about an instance of a product classification key and each second item comprises data about a product related to the multimedia object, the set of M second items being associated with the main item within the database according to said product classification key,
* at least one between the main item and at least one of the M second items is synchronized with the multimedia object,
the processor, the memory and the screen being configured to enable, at a further user command, to:
- display into the screen a new main item of the plurality of main items stored in the database, and a new set of M second items associated with the new main item within the database, wherein at least one between the new main item and the new set of M second items is different from said main item and said set of M second items.

In a further aspect the present disclosure relates to a system of accessing data about products related to a multimedia object, comprising a server with a database and a user device, the server, the database and the user device being configured to perform the method of the present disclosure.

In a further aspect the present disclosure relates to a computer program comprising software code configured to perform the method of the present disclosure.

In a further aspect the present disclosure relates to a computer readable storage medium comprising said computer program.

In a further aspect the present disclosure relates to a graphical user interface configured to enable a user to perform the method of the present disclosure in a user device.

In another aspect, the present invention relates to a method of product placement, comprising:
at a user command:
   - obtaining synchronizing data with a multimedia object,
   - based on the synchronizing data, displaying to the user a main item of a plurality of main items stored in a database, and a set of M second items associated with the main item within the database, M being an integer ≥ 1,
wherein:
   * each of the main items comprises data about an instance of a product classification key and each second item comprises data about a product related to the multimedia object, the set of M second items being associated with the main item within the database according to said product classification key,
   * at least one between the main item and at least one of the M second items is synchronized with the multimedia object,
at a further user command, the method comprising:
   - displaying to the user a new main item of the plurality of main items stored in the database, and a new set of M second items associated with the new main item within the database, wherein at least one between the new main item and the new set of M second items is different from said main item and said set of M second items.

The dependent claims refer to particularly advantageous embodiments of the invention.

The present invention in at least one of the aforementioned aspects can have at least one of the following preferred characteristics.

In a preferred embodiment, the method is a computer-implemented method.

Preferably, the computer readable storage medium is non-transitory.

In a preferred embodiment, the method is at least in part implemented by a user device.

Preferably, the main item, with the associated set of M second items, and the new main item, with the associated new set of M second items, are displayed in two different screens of a user device.

The new main item can be retrieved from the database by means of said synchronizing data obtained at the user command or by means of predefined indexes used in the database to relate the items to each other.

The new set of M second items can be retrieved from the database by means of said synchronizing data obtained at the user command or by means of predefined indexes used in the database to relate the items to each other.

Advantageously, the synchronizing data are configured to enable access, within the database, to the main item and the associated set(s) of M second items.

When there is a plurality of main items, each associated with a least one corresponding set of M second items, synchronized with the multimedia object, the synchronizing data will be configured to enable access, within the database, to said plurality of main items and the associated set(s) of M second items. The main item with the corresponding set of M second items to be displayed at the user command will be advantageously selected according to predefined criteria. For example, said predefined criteria can be set, and optionally changed, by the user or by a system administrator.

Preferably, when different from said main item, the new main item can be one the following items:
- another item obtained from the database based on said synchronizing data obtained at the user command,
- an item neighbour to said main item in an indexing of the database,
- one of the M second items associated with the main item within the database,
- an item associated with the multimedia object in an indexing of the database.

In the first case, the user -on the basis of his needs/interests- is given the possibility of displaying new main items with associated new set of M second items, which are synchronized with the multimedia object. In the other cases, once synchronized with the multimedia object, the user is given the possibility of displaying new main items, with associated new set of M second items, asynchronously with the multimedia object.

In a preferred embodiment, the item neighbour to the main item in an indexing of the database comprises data about another instance (if any) of the product classification key.

When there is a plurality of sets of M second items associated with the main item within the database, the new main item can be the same as the main item and the new set of M second items can be a different set of M second items associated with the main item within the database.

Preferably, at a further user command, the method comprises:
- displaying to the user a further new main item of the plurality of main items, and a further new set of M second items associated with the further new main item within the database.

Preferably, at least one between the further new main item and the further set of M second items is different from said new main item and said new set of M second items.

When different from said new main item, said further new main item can be one of the following items:
- another item obtained from the database based on said synchronizing data obtained at the user command,
- an item neighbour to said new main item in an indexing of the database,
- one item of the new set of M second items associated with the new main item within the database,
- an item associated with the multimedia object in an indexing of the database.

When there is a plurality of new set of M second items associated with the new main item within the database, the further new main item can be the same as the new main item and the further new set of M second items can be a different new set of M second items associated with the new main item within the database.

The product classification key can be one of a plurality of product classification keys (used in the database to group the products), each comprising at least one instance.

Preferably, each of the main items is stored in the database in association with at least one corresponding set of M second items.

Preferably, the main items are stored in the database with predefined indexes configured to relate the main items to each other, according to predefined criteria. For example, when the main item is an instance of a product classification key comprising a plurality of instances, the predefined indexes are preferably configured so as to correlate the main item with other instances of the same product classification key.

Preferably, the second items are stored in the database with predefined indexes configured to relate the second items of a same set to each other.

Preferably, the items are stored in the database in association with synchronizing data with the multimedia object. For example, this can be achieved by associating in the database the items with identifiers or time stamps synchronizing with corresponding time frames of the multimedia object.

Preferably, the (further, new) main items, with the associated (further, new) sets of M second items, are displayed so as to be scrollable in a screen of the user device.

The user is advantageously given the possibility of navigating through the products related to the multimedia object by scrolling different screens of the user device, each displaying a (further, new) main item with the associated (further, new) set of M second items.

The user is advantageously provided with a simple, flexible and fast tool to move forward and backward to a (further) new main item and associated (further) new set of M second items.

Preferably, the (further, new) main items, with the associated (further, new) sets of M second items, are displayed so as to be scrollable in a screen of the user device according to a respective predefined dimension (e.g. horizontal or vertical direction in the screen of the user device).

The user is advantageously enabled to move into the screen of the user device forward or backward to a (further) new main item, which follows or precedes the (new) main item (e.g. according to a horizontal scroll).

Preferably, the (further, new) sets of M second items are displayed so as to be scrollable in the screen of the user device according to at least one respective predefined dimension (e.g. horizontal and/or vertical direction in the screen of the user device).

The user is advantageously enabled to move across the M second items associated with a currently displayed (further, new) main item (e.g. according to a vertical scroll) and/or to change set of M second items associated with the currently displayed (further, new) main item (e.g. according to a horizontal scroll).

Advantageously, the scroll can be performed either by means of a touch-screen, a push-button screen or a screen controlled by a mouse, stylus, touchpad or any other pointing device.

Preferably, at a further user command, the method comprises displaying to the user additional data about a selected main item or second item of the currently displayed items. The additional data can comprise, for example, additional information and/or relate to service(s) provided to the user (e.g. buying, storing, social network sharing, and similar).

In a preferred embodiment, when additional data about the selected main or second item are displayed, the user is enabled to display additional data about another main item or about another second item of the currently displayed set by a scroll in the screen according to a predefined direction (e.g. horizontal or vertical).

In a preferred embodiment, the method comprises acquiring a multimedia signal currently associated with the multimedia object and processing the multimedia signal so as to obtain the synchronizing data from the multimedia signal. For example, the synchronizing data can be obtained from the multimedia signal by means of watermarking technique or fingerprint technique. In case of watermarking technique, the multimedia signal preferably comprises an embedded watermark (that is embedded information by means of a watermarking technique) comprising the synchronizing data themselves or a pointer to the synchronizing data.

Examples of watermarking techniques are spread spectrum watermarking technique, echo hiding watermarking technique, phase coding technique, informed watermarking schemes like QIM (Quantization Index Modulation) or STDM (Spread Transform Dither Modulation).

In a preferred embodiment, the multimedia signal is an audio signal.

According to another embodiment, the synchronizing data can be obtained from a server suitably synchronized with the multimedia object.

Preferably, the user device comprises a graphical user interface configured to enable a user to perform the method of the present disclosure in the user device.

Preferably, the user device comprises a multimedia input configured to acquire the multimedia signal from the multimedia object.

The user device can be a smart-phone, a tablet, a PC or similar device.

In a preferred embodiment, the database is a remote database external to the user device.

Further characteristics and advantages of the present invention will become clearer from the following detailed description of some preferred embodiments thereof, made as an example and not for limiting purposes with reference to the attached drawings. In such drawings,
- figure 1 schematically shows a system of accessing data about products related to a multimedia object according to an embodiment of the invention;
- figure 2 schematically shows an exemplarily screen of a user device that can be displayed by a user device according to an embodiment of the invention;
- figure 3 schematically shows a horizontal scroll, from right to left, of the screen of figure 2;
- figure 4 schematically shows a horizontal scroll, from left to right, of the screen of figure 2;
- figure 5 schematically shows a vertical scroll, from bottom to the top, of the screen of figure 2;
- figures 6a and 6b schematically show an example of change of displaying modality from "scene/products" into "product/actors";
- figures 7a and 7b schematically show an example of change of displaying modality from "product/actors" into "actor/scenes";
- figures 8a and 8b schematically show an example of change of displaying modality from "scene/products" into "actor/scenes";
- figures 9a and 9b schematically show another example of change of displaying modality from "scene/products" into "actor/products".

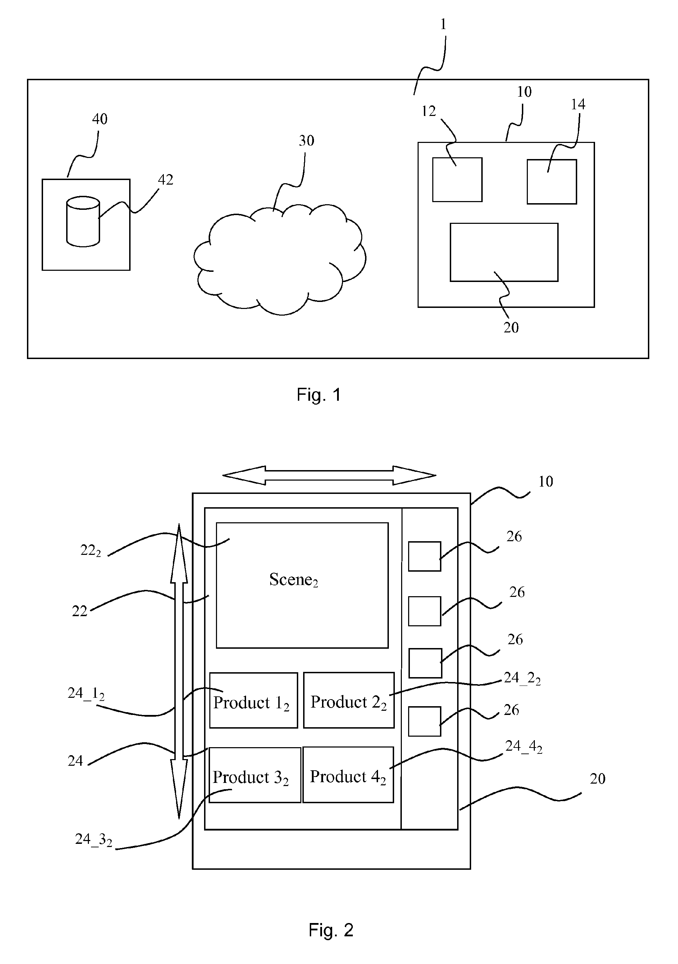

Figure 1 shows a system 1 of accessing data about products related to a multimedia object, comprising a user device 10, a communication network 30 and a remote server 40 with a database 42.

The communication network 30 can be any type of known communication network adapted to enable the user device 10 to communicate with the remote server 40.

The multimedia object can be, for example, a movie, a TV advertisement, a TV show, TV news, a video clip, a (live) sport event, a (live) fashion show, a shopping centre equipped with a stereo set for broadcasting a background audio, a live event as a concert, a conference, and similar.

The products can be any entity appearing, mentioned, audible or having any another relationship with the multimedia object.

The products can be, for example, commercial goods such as articles of clothing or furnishings; commercial sites such as restaurant, bar, pubs, hotels, resorts; tourist sites such as cities, towns, museums; music, songs, books, news, actors, singers, scenes of the multimedia object, actors playing in the multimedia object, typologies of products, (available) sizes or models, brands, colours, materials, wish-lists, TV broadcasters, TV scheduling, TV programs, and similar. The product can also be the multimedia object itself or another multimedia object.

The database 42 is a relational database wherein data about products related to one or more multimedia objects are stored.

In the database 42 the products are advantageously grouped by multimedia object and by means of predefined product classification keys, by using suitable indexes and data structures of the database 42.

The product classification key may be one of the above products or a different key. Examples of product classification key are the key "scene" of a multimedia object, "actor/actress" playing in the multimedia object, "typology of products", "(available) size" (or models), "brand", "colour", "material", "wish-list", and similar.

Each key (e.g the key "actor") can comprise a plurality of instances (e.g. the plurality of actors playing in the multimedia object).

For example, goods present in the multimedia object can be grouped in the database 42 by scenes where the goods are present and/or by actors to which they are in some way linked and/or by typologies of goods to which they belong and/or by typologies of wish-lists to which they belong and so on. Similarly, the scenes of a multimedia object can be grouped by actors and/or typologies of goods present in the scenes.

In order to enable synchronization with the multimedia object, the products related to the multimedia object and the instances of the product classification keys are advantageously associated in the database 42 with synchronizing data with the multimedia object. For example, this can be achieved by associating in the database 42 the products and the instances with identifiers or time stamps synchronizing with corresponding time frames of the multimedia object.

The user device 10 can be a smart-phone, a tablet, a PC or any similar device.

The user device 10 comprises hardware and/or software and/or firmware modules configured to implement the method of the present disclosure.

The user device 10 comprises a processor 12, a memory 14 and a screen 20.

The screen 20 can be a touch-screen, a push-button screen, a screen controlled by a mouse, a stylus, a touchpad or any other pointing device.

The user device 10 is configured to store in the memory 14 application software comprising computer program coded instructions configured to cause the user device 10 to carry out the method of the present disclosure. The application software can be, for example, downloaded from a suitable application server (not shown).

The application software comprises a graphical user interface configured to enables a user to interact with the application software.

The graphical user interface can comprise computer icons, screens, windows, pointing devices, visual indicators and/or computer menus.

For example, the graphical user interface comprises a starting icon (not shown) to enable the user to run the application software in the user device 10.

When the user runs the application software into the user device 10 (e.g. by clicking on said starting icon), the graphical user interface is configured to enable the user to input a user synchronizing command (e.g. by clicking on a suitable synchronizing icon) in order to obtain synchronizing data with the multimedia object.

The synchronizing data comprise data (e.g. identifiers or time stamps) enabling the user device 10 to access the database 42 in order to retrieve products and/or instances of product classification keys time synchronized with corresponding time frames of the multimedia object.

According to preferred embodiments, the synchronizing data can be obtained by means of watermarking or fingerprinting techniques.

In these cases, when the user inputs the synchronizing command, the user device 10 is preferably configured to acquire a multimedia signal (e.g. audio signal) from the multimedia object.

In case of watermarking technique, the multimedia signal will comprise an embedded watermark comprising the synchronizing data themselves or a pointer to the synchronizing data.

In case of fingerprinting, a fingerprint of the acquired multimedia signal is computed (e.g. by the user device 10 itself or by a remote server, not shown). The fingerprint may be computed on the multimedia signal as a whole or on suitable samples. The computed fingerprint is then compared (e.g. by the user device 10 itself or by a remote server, not shown) with a plurality of reference fingerprints, suitably stored in an external database (not shown) in association with corresponding synchronizing data. The synchronizing data are thus obtained by the reference fingerprint matching the computed fingerprint.

According to another embodiment, the synchronizing data can be obtained from a remote server. For example, the remote server may contain synchronizing data with the scheduling of a single or more TV channels. In this case, the multimedia objects can be advantageously confined within TV programs from a single TV channel. When, instead, the multimedia objects relate to TV programs from different TV channels, the synchronizing data can be obtained from the remote server under indication of the TV channel to which the multimedia object relates. The indication can be provided directly by the user or, for example, by a suitable watermark embedded into the multimedia signal configured to identify the TV channel.

Based on the obtained synchronizing data, the user device 10 accesses the database 42 and displays to the user (as exemplarily shown in figures 2 - 9) a screen comprising a main item 22ᵢ of N main items 22₁...22_{N} stored in the database 42 and a set of M second items 24₁ᵢ...24_{Mi} associated with the main item 22ᵢ within the database 42, with N ≥ 1, M ≥ 1, 1 ≤ i ≤ N, wherein:
* each of the main items 22₁...22_{N} comprises data about an instance of an product classification key and each second item 24ⱼᵢ (with 1 ≤ j ≤ M) comprises data about a product related to the multimedia object, the set of M second items being associated with the main item within the database 42 according to said product classification key, and
* at least one between the main item 22ᵢ and at least one 24ⱼ of the M second items is synchronized with the multimedia object.

In the embodiments shown in the figures, the main item 22ᵢ is exemplarily shown in a first (upper) portion 22 of the screen 20 while the associated set of M second items 24₁ᵢ...24_{Mi} is exemplarily shown in a second (lower) portion 24 of the screen 20. Of course, other displaying arrangements can be used.

The displayed data can comprise a picture, an icon or any other graphical representation of the item and/or additional information such as a textual descriptor, a (hyper) link, a brand, a model and similar.

The choice about the "main-item/second-item" displaying modality to be used at the user command (that is, what displaying as main item and second items) can be made a priori by a system administrator as default option or by the user. Then, the displaying modality can be advantageously changed into another displaying modality based on the user needs/interests.

Figure 2 shows an exemplarily screen that can be displayed by the user device 10 based on the obtained synchronizing data, wherein the main item 22ᵢ (with i=2) comprises data relating to the i-th (e.g. second) scene (of N scenes) synchronized with the multimedia object (e.g. a movie), that is the scene played at the moment the user inputs the user command in order to synchronize with the multimedia object, and the set of M second items are data about M products 24₁ᵢ...24_{Mi} (e.g. M clothing and/or furnishing articles) associated with the i-th scene within the database 42, with M=8 and only 4 of the M products displayed in the screen of figure 2.

Once synchronized with the multimedia object and displayed the synchronized screen, the user has the possibility to display other screens with new main items and associated set of M second items, by using the same or a different displaying modality. The different displayed screens may differ to each other by the main item and/or by the set of M second items.

Accordingly, at a further user command, the graphical user interface is configured to display to the user a new main item 22ᵢ and a new set of M second items 24₁ᵢ...24_{Mi} associated with the new main item 22ᵢ within the database 42.

The new main item 22ᵢ and the associated new set of M second items 24₁ᵢ...24_{Mi} are advantageously displayed in a same screen, different from the previous one displaying the main item 22ᵢ and the associated set of M second items 24₁ᵢ...24_{Mi}.

When different from the main item, the new main item can be, for example, one of the following:
- an item neighbour to said main item in an indexing of the database 42,
- another item obtained from the database 42 based on the synchronizing data,
- one of the M second items associated with the main item within the database 42,
- any other item stored in the database 42 in association with the current multimedia object.

When the new main item is the same as the main item, the new set of M second items can be another set of M second items associated with the main item within the database 42.

The graphical user interface is preferably configured to enable the user to select and change the displaying modality. For example, this can be achieved by clicking on suitable icons 26, schematically shown in the figures.

In addition, the graphical user interface is preferably configured to enable the user to interact with the multimedia object in two-dimensions. This is schematically shown in the figures by a horizontal two-pointed arrow and a vertical two-pointed arrow. The horizontal two-pointed arrow schematically represents the possibility of displaying other main items, with the associated set of M second items, by means of a horizontal scroll. On the other side, the vertical two-pointed arrow schematically represents the possibility of navigating through the M second items associated with the currently displayed main item, by means of a vertical scroll.

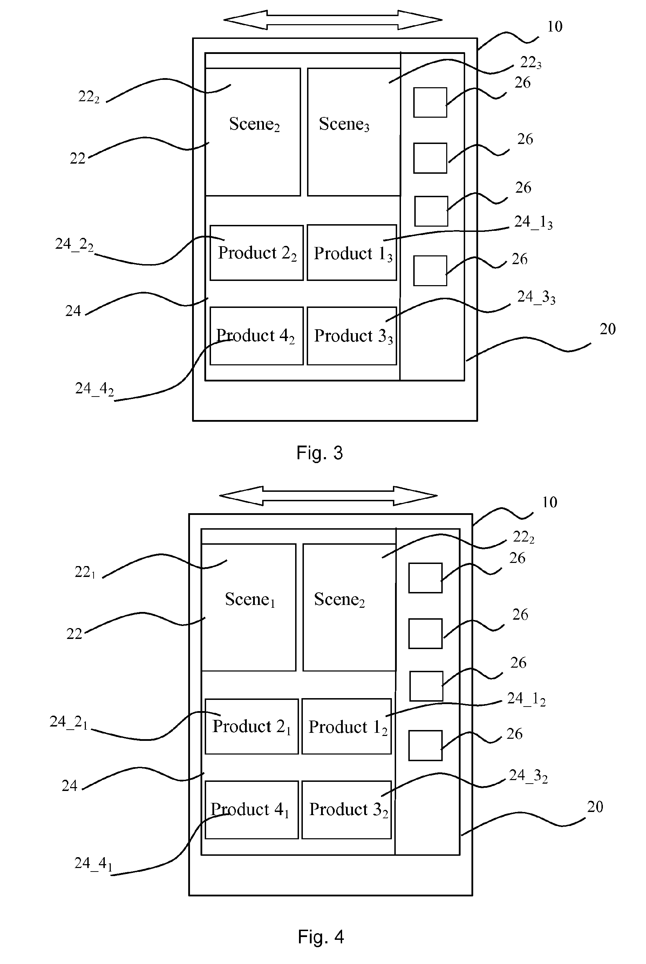

Figures 3-4 show examples of screens that can be obtained with a horizontal scroll (respectively, right to left and left to right) starting from the screen of figure 2, wherein the displayed new main item is a scene neighbour to the i-th scene in an indexing of the database 42 (with i=2).

In particular, starting from the screen of figure 2, a horizontal scroll from right to left enables to access scenes subsequent to the i-th scene while a scroll from left to right enables to access preceding scenes.

Therefore, once synchronized with the current i-th scene of the multimedia object the user is given the possibility of navigating through other scenes of the movies and of displaying the associated set of M products, in a way asynchronous with respect to the multimedia object.

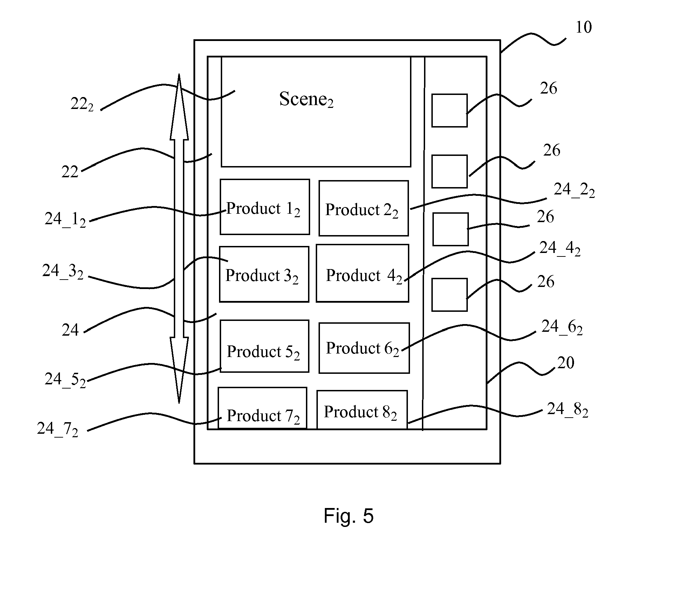

In addition, once synchronized with the current i-th scene of the multimedia object the user is given the possibility of navigating through the set of M (e.g. M=8) products associated with the currently displayed scene by means of a vertical scroll: a scroll from the bottom to the top (see figure 5) and vice versa.

Graphically, the possibility of navigating through the scenes and the M products is preferably given within a same screen.

Accordingly, the user is advantageously provided with a fast, user friendly and efficient tool for accessing data about products related to the multimedia object.

The M second items associated with the currently displayed main item could be displayed one at a time, in groups or all together in a same screen (in this latter case the vertical scroll may be not necessary).

Preferably, the graphical user interface is also configured to enable the user to select the currently displayed main item and/or one second item of the currently displayed set (for example by clicking on it) so as to display extra information (e.g., multimedia object description, product description, brand, models, prices, available sizes, available colours, point of sales, linked websites, related products, and similar) and/or services linked to the selected item (e.g. buying, storing, social network sharing, and similar).

Once the user has selected a second item, the graphical user interface is also preferably configured to enable the user to display the other second items associated with the main item currently displayed. This can be for example implemented by displaying the other items one at a time (that is, in different screens) by means of a horizontal scroll. This enables to provide the user with a fast and user friendly tool for easily and quickly passing from data about one second item to data about another second item associated with the currently displayed main item.

The scrolls can be performed, for example, by means of a touch-screen, a push-button screen or a screen controlled by a mouse, stylus, touchpad or any other pointing device.

The graphical user interface is also preferably configured so as to enable the user to interact with the displayed items and to perform at least one of the following exemplarily operations:
- to make a "pinch to zoom" in order to better visualize the displayed item;
- to save the main item, the multimedia object and/or the second item(s) into a wish-list;
- to access web pages comprising information on multimedia objects and/or related products more appreciated by other users;
- to buy a product (including the multimedia object itself, for example in case of a movie). This operation can advantageously be performed by means of a "one-click buying" technique enabling the user to make online purchases with a single click with payment information and optionally additional information on user preferences (e.g., size, colour, typology of products, and similar) already entered by the user previously;
- to display a graphical representation of the user (e.g. a picture or avatar) with the possibility of putting on it products (e.g. clothing articles) related to the multimedia object;
- to display a virtual space with the possibility of placing in it products (e.g. furnishing and design articles) related to the multimedia object;
- to display custom-made groups of products related to the multimedia object, based on preferences expressed by the user or based on products more clicked by the user within one or more multimedia objects.

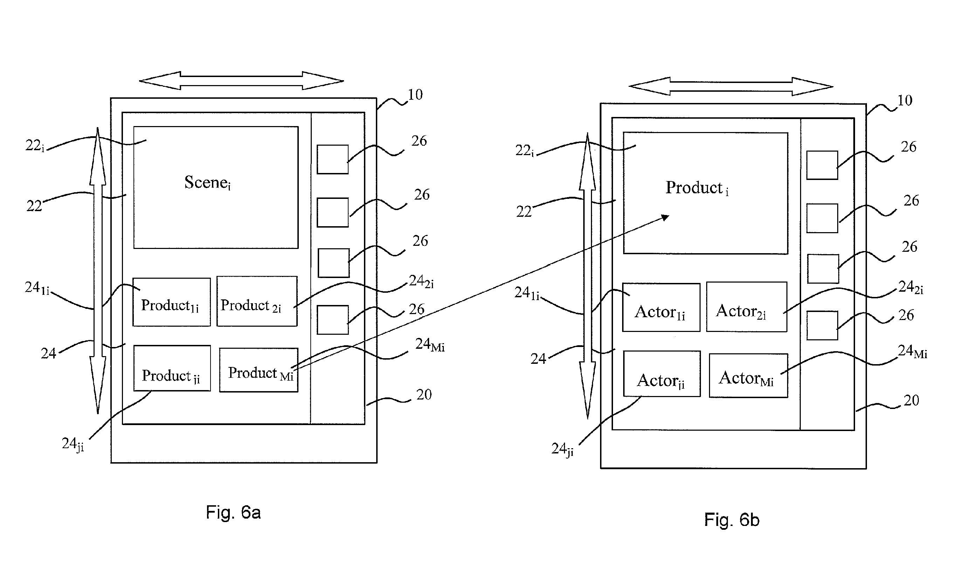

Figures 6a and 6b show examples of screens that can be obtained (for example by clicking on one of the icons 26) starting from a screen similar to that of figure 2, in order to change into a new displaying modality wherein the displayed new main item is one of the M second items associated with the currently displayed main item.

In particular, figure 6a shows a screen similar to that of figure 2 with a displaying modality "scene/products" while figure 6b shows an example of screen that can be obtained by changing into a displaying modality "product/actors" wherein the new main item comprises data about the M-th product related to the i-th scene of figure 6a and the associated M second items comprise data about the actors having a relationship with the M-th product (optionally restricted only to the actors playing in the i-th scene).

In figure 6b, the horizontal two-pointed arrow schematically shows the possibility of displaying other products related to the multimedia object (all the products or only those products related to the i-th scene), with the associated set of actors, by means of a horizontal scroll.

On the other side, the vertical two-pointed arrow schematically shows the possibility of navigating through the set of M actors associated with the currently displayed product by means of a vertical scroll.

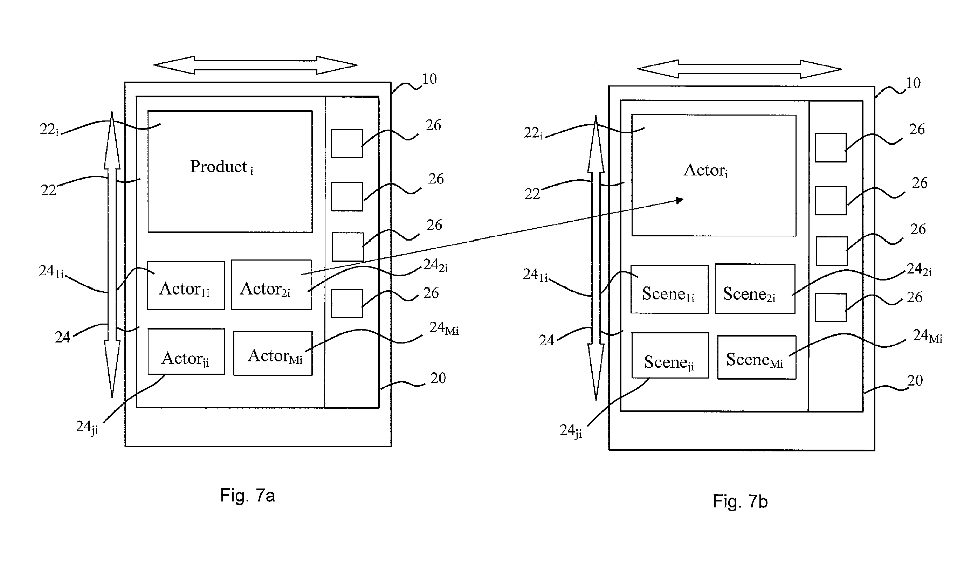

Figures 7a and 7b show another example wherein a current displaying modality "product/actors" is changed into a new displaying modality "actor/scenes", wherein the displayed new main item is one of the M second items associated with the currently displayed main item.

In particular, figure 7a shows an example wherein the main item comprises data about a i-th product related to the multimedia object and the associated M second items comprise data about the actors having a relationship with the i-th product (e.g. the actors wearing the i-th product, wherein the i-th product is a clothing article).

Figure 7b shows an exemplarily different displaying modality (e.g. obtained by clicking on a suitable icon 26) wherein the new main item comprises data about the 2nd actor having a relationship with the i-th product in figure 7a and the associated M second items comprise data about the scenes wherein the 2nd actor appears (optionally restricted also to the scenes wherein the i-th product appears).

In this case, the horizontal two-pointed arrow schematically shows the possibility of displaying other actors of the multimedia object (all the actors or only those having a relationship with the i-th product), with the associated set of scenes, by means of a horizontal scroll.

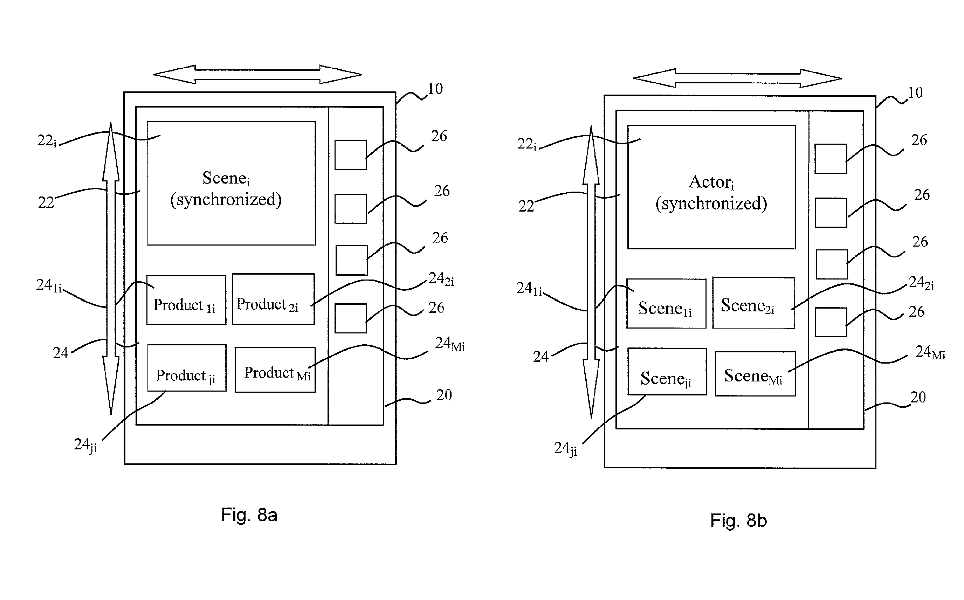

Figures 8a and 8b shows another example wherein a current displaying modality is changed into a new displaying modality with a new main item and associated new set of M second items, wherein the new main item is obtained from the database 42 based on the synchronizing data.

In particular, figure 8a shows a screen similar to that of figure 2, with a displaying modality "scene/products" wherein the main item 22ᵢ comprises data about a i-th scene synchronized with the multimedia object, that is the scene played at the moment the user inputs the user command in order to synchronize with the multimedia object, and the associated set of M second items comprises data about M products 24₁ᵢ...24_{Mi} related to the i-th scene. The i-th scene is retrieved from the database by means of the synchronizing data obtained at the moment of the user command.

Figure 8b shows an exemplarily different screen wherein the displaying modality "scene/products" is changed into a displaying modality "actor/scenes". In particular, in figure 8b the new main item comprises data relating to a i-th actor synchronized with the multimedia object, that is (one of) the current actor appearing in the multimedia object at the moment the user inputs the user command in order to obtain the synchronizing data, and the associated new set of M second items comprises data about the scenes wherein the i-th actor appears. As the i-th scene of figure 8a, also the i-th actor of figure 8b is retrieved from the database by means of the synchronizing data obtained at the moment of the user synchronizing command.

In this case, the horizontal two-pointed arrow schematically shows the possibility of displaying other actors of the multimedia object (all the actors or only those appearing in the i-th scene), with the associated set of scenes, by means of a horizontal scroll.

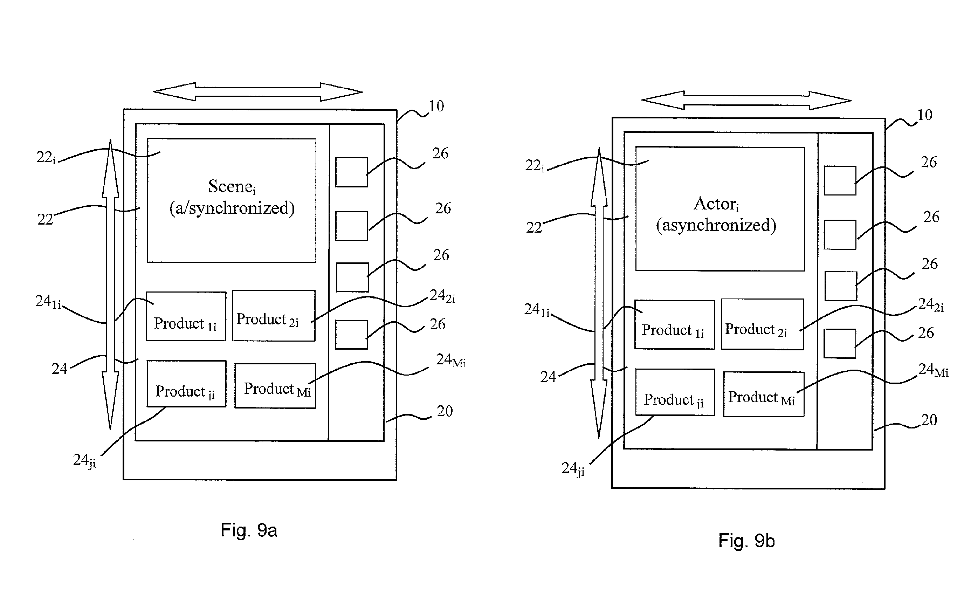

Figures 9a and 9b shows another example wherein the graphical user interface enables to change a current displaying modality into another displaying modality with a new main item and associated new set of M second items, wherein the new main item is any other item stored in the database 42 in association with the current multimedia object.

Figure 9a shows a screen with a displaying modality "scene/products" wherein the main item 22ᵢ comprises data about a i-th scene (not necessarily synchronized with the multimedia object) and the associated set of M second items are data about M products 24₁ᵢ...24_{Mi} related to the i-th scene.

Figure 9b shows an exemplarily different screen wherein the displaying modality "scene/products" is changed into a displaying modality "actor/products" (e.g. by clicking on one of the icons 26). In this case, the i-th actor shown in figure 9b as new main item can be retrieved from the database, according to any selection criteria, among the actors of the i-th scene or in general among all the actors associated in the database 42 with the multimedia object.

Even if not shown, the present disclosure also contemplates the case wherein the user is given the possibility of displaying a new set of M second item associated within the database 42 with a currently displayed main item. To this purpose, the graphical user interface is preferably configured to enable the user to change the set of M second items to be displayed in association with the currently displayed main item. This, for example, can be achieved by enabling the user to select (e.g. by means of suitable icons) the new set of M second items to be displayed; or to pass from a horizontal (vertical) scroll acting on the main items to a horizontal (vertical) scroll acting on the second items; or to perform in the screen 20 two horizontal (vertical) scrolls (e.g. main item horizontal scroll in the upper portion 22 of the screen 20 and second items horizontal scroll in the lower portion 24 of the screen 20).

Moreover, the present disclosure contemplates the case wherein a product classification key comprises a single instance. In this case, when such a single instance (e.g. a single scene) is displayed as main item with the associated set of M second items, the user will be advantageously given the possibility of navigating through the currently displayed set of M second items, to display another set of M second items associated with the same main item and/or to change displaying modality into a new "main item/second-item" displaying modality, wherein the new main item will be an instance of another product classification key.

It is further noted that, even if not shown, the present disclosure also contemplates the case wherein, once synchronized with the multimedia object, the user is given the possibility of accessing data about products related to other multimedia objects that are linked within the database 42 to the current multimedia object. For example, in case of an episode of a TV series, the user can be given the possibility of accessing data about products related to other episodes of the TV series.

The present disclosure also contemplates the case wherein the multimedia object comprises a place with a background audio (e.g. broadcasted by a stereo set), that can be live or registered and played back as a video by the user. The synchronizing data can be obtained, for example, from the background audio by using a watermarking or fingerprinting technique.

For example, this embodiment can be useful to enable a user to access data about live events such as a fashion live show or a shopping centre. In case of a fashion live show, the user can be given the possibility of obtaining data about clothing articles related to the current fashion live show (and optionally related to other fashion shows) and accessing related services (e.g. buying, booking, social network sharing and similar). In case of a shopping centre, the user can be given the possibility of obtaining data about clothing articles, getting information about sales promotion, and similar.

In the various aspects thereof, the present disclosure enables access to product information related to a multimedia object (such as a movie, a TV program, a music video clip, music broadcasted in an environment) coming from a multimedia provider such as a TV station, a PC, a stereo set or the like.

The present disclosure also provides a graphical user interface for a user device such as a smart-phone, a tablet, a PC or the like, which allows the user to quickly access said information.

For example, the present disclosure allows a user to interact with products shown on television (e.g. in a movie, a TV series, a TV program or the like); collect product information; read reviews; know the price and closest place where to buy; get promotions and discounts; quickly buy online; leave a feedback; create communities and the like.

According to the present disclosure, this can be obtained by a technology that is capable of recognising a multimedia signal that reaches the user device and of associating such signal with the program, movie or TV series and optionally, also with the single scene that the user is watching, returning a series of images as a feedback which correspond to a plurality of products present in the movie/scene that the user is watching.

The graphical user interface according to the present disclosure allows the user to quickly gain access to such information even with a single click on his device.

By way of an example only, shown in figures 2-5, the graphical user interface may allow the user to interact with the multimedia object (for example a film) along two dimensions. In fact, on the one hand, on screen 20 of the user device 10 the film may be split into sequential temporal blocks, which may be defined as scenes 22, which allow the user to browse within the film context along a horizontal temporal axis: the user can move forward to a next scene (e.g. scene 3) or move backward to previous scenes, with respect to the scene (e.g. scene 2) which contains the moment when the user interacted with the interface of his user device 10. On the other hand, each temporal block or scene is associated with a set of products 24 (e.g. product 1₂, product 2₂, product 3₂, product 4₂) associated with a scene (e.g. scene 2), presented along a vertical axis.

The user can thus browse through the scenes of a film through a horizontal scroll (see figures 3 and 4): scrolling from right leftwards moves to the next scene, and scrolling from left rightwards moves to the previous scene.

Moreover, within a scene, the user can move between one product and another associated with such scene through a vertical scroll (see figure 5).

For each scene, the graphical user interface displays, with images and/or text, a set of products associated with the scene selected by the user and for each of them, the user can access detailed information (e.g. name, brand, product description) and proceed with some actions (e.g. buying, saving the product to a dedicated section, sharing via social networks).

Graphically, the possibility of moving between the scenes and the set of products is implemented within a same screen.

If the user accesses a section containing the detailed information of a single product, the system allows the user to directly access the detailed information related to another product associated with the same scene through a horizontal scroll, thus preventing the need to exit the section of interest for the user.

The invention therefore allows a user to quickly access information about the products related to a multimedia object, minimising the number of interactions with his user device and with the multimedia provider, greatly simplifying the use thereof. For example, the present disclosure advantageously allows a multimedia object to be transformed into a digital magazine for interactive product placement. The invention provides the user with a fast, efficient, innovative and user-friendly tool to identify and get extra contents about products and/or interact with the multimedia content (e.g. extra clips, gaming,..).

A user watching a multimedia object (such as a movie, a TV program, a music video clip, a commercial advertisement, a live event) coming from a multimedia provider (such as a TV station, a PC or the like), can starts the application software (hereinafter also referred to as "App") configured to implement the method of the present disclosure on his user device.

The user can click a button of the App graphical user interface, configured to control the acquisition of the audio and/or video signal coming from the multimedia object.

The multimedia object that the user is watching is recognised by the user device, optionally with the aid of a remote server, for example by means of:
i. watermarking technology: a watermark is extracted from the acquired signal, which uniquely identifies a scene or the multimedia object that the user is watching. A unique identifier may be associated beforehand with each watermark in a database, preferably external to the user device.
ii. fingerprinting technology: a comparison is made between the fingerprint of the signal acquired by the App (as a whole or only significant samples) and the fingerprint of files contained in a database, preferably external to the user device. Each file in the database may be associated beforehand with a unique identifier.

In both cases, the products (or sets of products) associated with the multimedia object or with a predetermined scene of the multimedia object that the user is watching will be identified by means of the unique identifier.

For example, in the specific case of sets of products associated scene by scene with the multimedia object (e.g. for each scene, a set of products that appears in the scene itself is displayed), the database preferably comprises data structures which, through the identifier, allow the products to be associated with the scene and the scene with the corresponding multimedia object.

In the case of watermarking technology, the identifier may be embedded in the signal as a watermark.

With such identifier in a data structure of the database containing all the products of all the multimedia objects, only those products that are associated with that identifier, i.e. with the scene that the user is watching at that time, will be identified. In an embodiment, the database can have at least two data structures (for example tables): a «scene» data structure containing the list of all the scenes of all the multimedia objects with the related identifiers; and a «product» data structure containing a list of all the products of all the multimedia objects. Each product may be associated with one or more identifiers of a scene (when the same product is visible in multiple scenes, even belonging to different multimedia objects).

In an alternative embodiment, a scene can be identified through the unique identifier obtained through watermarking or fingerprinting technology. Only one «scene» table can be present within the database, wherein in addition to the identifier of the scene itself, the set of all the products associated with that scene is provided.

Once the products have been identified by means of the unique identifier, the App receives the images/descriptions/information/extra contents related to such products associated with the scene. The user device displays a screen to the user (see, for example, the screens of figures 2-5) containing:
- a reference to what the user is watching (e.g. an image representing the scene and/or a descriptive and information text);
- the products associated with the single scene of the multimedia object: for example, an image representing the product and/or a product descriptive and information text (that is, containing information about price, brand, points of sale, related products, links to selling or brand websites, and the like).

The products associated with the scene may be displayed as sets of products or individually displayed, with the possibility of displaying the other products associated with the scene (e.g. through a left/right or top/bottom scroll or a button for the previous/next product).

The products may also be not related to the single scene but to the multimedia object as a whole, so as to display all the products associated with the multimedia object. For example, if the user is watching an episode of a television series, the App can display all the products associated with that episode, either together or one at a time, giving the user the possibility of displaying also the previous/next product.

The user may further display products not directly related to the multimedia object itself but related to other episodes/movies related to what the user is watching.

Once the above information has been displayed on the user's screen, the user can perform the following actions:
a. optionally click on a product to get further information;
b. make a "pinch to zoom" to view the image representing the product in detail;
c. click on the reference to what the user is watching to get more information about the multimedia object;
d. scroll up/down (or right/left) to view further products of that scene;
e. scroll right/left (up/down) to move to the next/previous scenes and thus retrieve all the products associated with the next/previous scenes from the database. In order to move from one scene to a previous or next scene, two further fields may be provided in the «scene» data structure: «previous scene» with the identifier of the scene before the one that the user is watching, «next scene» with the identifier of the scene after the one that the user is watching. As an alternative, the previous and next scene may be identified by performing some comparison operations between the time data contained in dedicated fields related, for example, to the starting and ending times of each scene. The download of the information related to the set of products of previous and next scenes from the database may occur either when the user interacts with his device to request such information (e.g. by right/left or up/down scroll or by dedicated buttons) or automatically (or on the user's request) when loading the information related to the set of products of the current scene;
f. add the product to a wish-list to quickly retrieve it at a later time;
g. display another screen containing the information related to the classification of the most viewed multimedia objects/products;
h. "one-click buy", i.e. buy a product of a scene of a multimedia object through one (or more) user's interactions, with the possibility of cancelling the purchase within a predetermined time interval. To this end, it can be envisioned that the user provides personal information about his preferences, size, measures and the like;
i. "try-me", i.e. display a user (e.g. a picture or an avatar) wearing one or more products obtained from one or more scenes;
j. "try-house", i.e. display a virtual space where one or more products obtained from one or more scenes can be arranged, such as furnishing articles, for example chairs, tables, auto wardrobes, lamps, sofas;
k. make custom associations between one or more products obtained from one or more scenes on the basis of the preferences expressed by the user;
l. make custom associations on the basis of the multimedia objects most viewed by the user, also between products extracted from different multimedia objects.

The App could also be configured for individually displaying a predetermined plurality of products associated with the multimedia object as a whole and allowing the user, through right/left or up/down scroll, to display the previous/next products.

The present disclosure also applies to the case of a user who, in the presence of an audio signal broadcasted in a certain environment, by clicking on his user device obtains additional information about the actual or multimedia products present in that environment. In addition/alternative, the present disclosure also applies to the case of a user who records or plays a video in a certain environment. For example, this applies to the case of a live event such as a fashion show or a point of sale. For example, in the case of a fashion show, it will be possible to identify the products presented in the same show and optionally obtain information about the products presented in previous fashion shows. By accessing the products, for example, it will be possible to reserve or buy them in advance and share them on social networks. On the other hand, in the case of a point of sale, it will be possible to obtain any promotions on products on sale and similar information.

The App is advantageously configured so as to display products grouped by keys different from the scenes. For example, products related to one or more multimedia objects or sound sources may be grouped by product typology, actors, available sizes, brands, colours, fabrics, wish-lists of the user or friends or other users. In addition/alternative, scenes, actors, brands, colours, fabrics and/or wish-lists associated with a predetermined product related to one or more multimedia objects or sound sources may be displayed. The display may be made by right/left or up/down scrolling. The type of display may be set as a default option of the App or selected by the user.

From the above description, it will be clear that the present disclosure, in the various aspects thereof, enables a user to synchronize easily and quickly (e.g. by means of a single synchronizing user command) with a multimedia object and, once synchronized with it, to identify, search, retrieve and use data about products related to the multimedia object with a fast, efficient, flexible and user friendly tool. Once synchronized with the multimedia object, a user is advantageously enabled to navigate asynchronously through the products associated with the multimedia object, to select the displaying modality "main item/second items" of interest and to change it into another displaying modality, according to the user needs, with a limited number of interactions with the user device and the multimedia object.

Once the user is synchronized, the multimedia object is advantageously transformed into a digital interactive magazine wherein the user can easily identify, search, retrieve and access data and services about products related to the multimedia object and to interact with them.

From the point of view of product advertising, the present disclosure, in the various aspect thereof, provides a very powerful tool for implementing interactive product placement.

## Claims

1. Method of accessing data about products related to a multimedia object, comprising:
at a user command:
- obtaining synchronizing data with the multimedia object,
- based on the synchronizing data, displaying to the user a main item of a plurality of main items stored in a database and a set of M second items associated with the main item within the database, M being an integer ≥ 1,
wherein:
* each main item comprises data about an instance of a product classification key and each second item comprises data about a product related to the multimedia object, the set of M second items being associated with the main item within the database according to said product classification key,
* at least one between the main item and at least one of the M second items is synchronized with the multimedia object,
at a further user command, the method comprising:
- displaying to the user a new main item of the plurality of main items stored in the database, and a new set of M second items associated with the new main item within the database, wherein at least one between the new main item and the new set of M second items is different from said main item and said set of M second items.

2. Method according to claim 1, wherein the new main item and the new set of M second items are retrieved from the database by means of said synchronizing data obtained at the user command or by means of predefined indexes used in the database to relate the items to each other.

3. Method according to claim 1 or 2, wherein, when different from said main item, the new main item is one the following items:
- another item obtained from the database based on said synchronizing data obtained at the user command,
- an item neighbour to said main item in an indexing of the database,
- one of the M second items associated with the main item within the database,
- an item associated with the multimedia object in an indexing of the database.

4. Method according to any of claims 1 to 3, wherein, when said new main item is the same as said main item, the new set of M second items is a different set of M second items associated with the main item within the database.

5. Method according to any of claims 1 to 4, wherein the main item, with the associated set of M second items, and the new main item, with the associated new set of M second items, are displayed so as to be scrollable in a screen of a user device according to a predefined direction.

6. Method according to any of claims 1 to 5, wherein the set of M second items and the new set of M second items are displayed so as to be scrollable in a screen of a user device according to at least one predefined direction.

7. Method according to any of claims 3 to 6, wherein, the item neighbour to said main item in said indexing of the database comprises data about another instance of said product classification key.

8. Method according to any of claims 1 to 7, wherein the main item is stored in the database with predefined indexes configured so as to correlate the main item with other instances of said product classification key.

9. Method according to any of claims 1 to 8, wherein the M second items are stored in the database with predefined indexes configured to relate the M second items of the set to each other.

10. Method according to any of claims 1 to 9, further comprising acquiring a multimedia signal currently associated with the multimedia object and processing the multimedia signal so as to obtain the synchronizing data from the multimedia signal.

11. Method according to claim 10, wherein the synchronizing data are obtained from the multimedia signal by means of a watermarking technique or a fingerprinting technique.

12. Method according to any of claims 1 to 9, wherein the synchronizing data are obtained from a server suitably synchronized with the multimedia object.

13. User device comprising a processor, a memory and a screen configured to enable, at a user command, to:
- obtain synchronizing data with a multimedia object,
- based on the synchronizing data, display to the user a main item of a plurality of main items stored in a database and a set of M second items associated with the main item within the database, M being an integer ≥ 1,
wherein:
* each main item comprises data about an instance of a product classification key and each second item comprises data about a product related to the multimedia object, the set of M second items being associated with the main item within the database according to said product classification key,
* at least one between the main item and at least one of the M second items is synchronized with the multimedia object,
at a further user command, the processor, the memory and the screen being configured to:
- display to the user a new main item of the plurality of main items stored in the database and a new set of M second items associated with the new main item within the database, wherein at least one between the new main item and the new set of M second items is different from said main item and said set of M second items.

14. Computer program comprising software code configured to perform the method of any of claims 1 to 12.

15. Graphical user interface configured to enable a user to perform the method of any of claims 1 to 12 in a user device.
